**Europäisches Patentamt**

**European Patent Office**

**Office européen des brevets**

(11) Veröffentlichungsnummer: **0 072 992**
**A2**

## (12) EUROPÄISCHE PATENTANMELDUNG

(21) Anmeldenummer: **82107404.4**

(22) Anmeldetag: **14.08.82**

(51) Int. Cl.³: **B 01 D 29/30**
**C 12 G 1/02**

(30) Priorität: **21.08.81 DE 3133058**

(43) Veröffentlichungstag der Anmeldung:
**02.03.83 Patentblatt 83/9**

(84) Benannte Vertragsstaaten:
**AT CH FR IT LI**

(71) Anmelder: **Rieger, Herbert**
**Talstrasse 33**
**D-7121 Ingersheim(DE)**

(72) Erfinder: **Rieger, Herbert**
**Talstrasse 33**
**D-7121 Ingersheim(DE)**

(74) Vertreter: **Patentanwälte Kohler - Schwindling - Späth**
**Hohentwielstrasse 41**
**D-7000 Stuttgart 1(DE)**

(54) Grossbehälter.

(57) Die Erfindung bezieht sich auf einen Großbehälter für ein Stoffgemisch aus einer Flüssigkeit und einem ausziehbaren Feststoff, insbesondere auf einen Gärbehälter für Traubenmaische, mit einer Saftkammer. Sie besteht darin, daß das Sieb, das den Behälterinnenraum von der Saftkammer trennt, als beweglicher, aus der Kammer herausnehmbarer Einsatz ausgebildet ist.

Fig. 2

**0072992**

Anmelder:

Herbert Rieger
Talstraße 34
7121 Ingersheim

Stuttgart, den 14. Juli 1982
P 4096 Ausld. K/C

Vertreter:

Kohler-Schwindling-Späth
Patentanwälte
Hohentwielstr. 41
7000 Stuttgart 1

## Großbehälter

Die Erfindung bezieht sich auf einen Großbehälter für ein
Stoffgemisch aus einer Flüssigkeit und einem aussiebbaren
Feststoff, insbesondere auf einen Gärbehälter für Traubenmaische, mit einem Sieb und einer außen an der Beälterwand
angeordneten, durch das Sieb von dem Behälterinnenraum abgetrennten Flüssigkeitskammer mit Auslauf für die Flüssigkeit.

Großbehälter müssen leicht zu reinigen sein, sie sollen
keine Teile aufweisen, in denen sich der Feststoff absetzen kann. Dies gilt insbesondere für stehende und liegende Gärbehälter für Traubenmaische, bei denen es besonders wichtig
ist, daß nach der Reinigung keine Trester mehr im Behälter
zurückbleiben.

Bei einem vorgeschlagenen Gärbehälter gemäß der
DE-OS 31 01 510.7 ist die Saftkammer außen an der Behälterwand angesetzt und die Behälterwand weist im Bereich der
Saftkammer eine Aussparung auf, die durch das Sieb verschlossen ist. Das Sieb ist mit den Rändern der Aussparung
verschweißt und die Saftkammer kann außen abgenommen oder
auch nur abgeklappt werden, sie kann an einer oder zwei
einander gegenüberliegenden Seitenwänden eine verschließbare
Reinigungsöffnung aufweisen.

Der Erfindung liegt in gleicher Weise die Aufgabe zugrunde,
derartige Behälter, und zwar nicht nur Gärbehälter für Traubenmaische, sondern auch andere Großbehälter, die einen
Feststoff und eine Flüssigkeit enthalten, so auszubilden,
daß sowohl der Behälter selbst als auch die Flüssigkeitskammer unter möglichst geringem Arbeitsaufwand gereinigt werden
kann, insbesondere von zurückbleibenden Feststoffen befreit
werden kann.

Diese Aufgabe wird gemäß der Erfindung dadurch gelöst, daß
das Sieb als beweglicher, aus der Kammer herausnehmbarer
Einsatz ausgebildet ist.

Dadurch, daß das Sieb herausnehmbar ist, kann es von Feststoffresten wesentlich besser gereinigt werden, insbesondere
wenn das Sieb als Schlitzblech ausgebildet ist und Traubentrester aus dem Sieb entfernt werden sollen. Andererseits aber kann, da das Sieb herausnehmbar ist, die Saftkammer
auch vom Innenraum aus gereinigt werden, bei Bedarf auch von
außen.

Das Sieb kann aus einer einfachen Siebplatte bestehen und im
Abstand von der äußeren, vom Behälter abgewandten Wand der
Flüssigkeitskammer in einer Führung geführt sein, so daß auf
der dem Behälterinneren abgewandten Seite des Siebes in der
Flüssigkeitskammer sich die Flüssigkeit sammelt und über
einen üblichen Auslauf abgezapft werden kann. Der Siebeinsatz kann aber auch so ausgebildet sein, daß die Siebplatte,
die etwa parallel oder schräg zu der Innenfläche des Behälters verläuft, also je nach der Größe des Behälters eine
der Behälterwand angepaßte Rundung aufweist, an mindestens
zwei einander gegenüberliegenden Seitenrändern rechtwinklig
zu der Platte nach außen verlaufende Leisten aufweist. Diese
Leisten dienen einerseits zur Verstärkung der Siebplatte,
andererseits können diese Leisten zur besseren Führung des
Siebeinsatzes beim Einschieben in die Flüssigkeitskammer
dienen.

Die Flüssigkeitskammer ist zweckmäßigerweise nach vorne zur
Frontseite, also zur Bedienungsseite des Behälters, offen,
und die Richtung, mit der der Siebeinsatz in die Flüssigkeitskammer eingeschoben wird, verläuft bei zweckmäßigen
Ausführungsformen der Erfindung etwa waagrecht. Die Höhe der
Leisten kann bei Ausführungsformen der Erfindung etwa der
lichten Höhe der Saftkammer entsprechen. Die Leisten können
aus undurchlässigem Werkstoff oder aber wie die Siebplatte
aus Siebwerkstoff bestehen. In der Regel bestehen diese
Großbehälter aus Edelstahlblech und der Siebeinsatz sowie
die Saftkammer bestehen aus dem gleichen Material. Die Siebe sind, wie erwähnt, durch Schlitze im Stahlblech oder durch anders geformte Aussparungen, beispielsweise runde Bohrungen, gebildet. Wenn die Leisten ebenfalls aus Siebwerkstoff bestehen, so kann dies für das Herausziehen des Siebeinsatzes aus der Flüssigkeiskammer vorteilhaft sein, wenn sich Feststoff in dem Zwischenraum zwischen der Innenwand der Flüssigkeiskammer und dem Siebeinsatz festgesetzt hat.

Diese seitliche Leiste an der Siebplatte sowie die benachbarten Wände der Flüssigkeitskammer können bei Ausführungsformen der Erfindung zumindest am oberen und am unteren Rand eine von innen nach außen sich verjüngende Richtung aufweisen. Dies hat den Vorteil, daß, vom Behälterinneren her gesehen, der Übergangswinkel zwischen der Behälterinnenwand und der Innenwand der Flüssigkeitskammer nicht rechtwinklig, sondern stumpf verläuft und daher bei entferntem Siebeinsatz ein im Behälterinneren zum Reinigen eingesetzter Reinigungskopf ohne scharfe Kante gut in die Flüssigkeitskammer eingreifen und reinigen kann.

Die an der Siebplatte befestigten Leisten können bei in die Kammer eingesetztem Siebeinsatz in einem Abstand von den benachbarten Kammerwänden verlaufen und nur an ihrem äußeren Rand an Seitenflächen der Kammer oder mit ihrer äußeren Stirnwand dichtend an der rückwärtigen Innenfläche der Kammer anliegen. Wenn in diesem Falle die Leisten ebenfalls als Siebe ausgebildet sind, so vergrößert sich die Siebfläche etwas. Bei anderen Ausführungsformen der Erfindung verlaufen bei eingesetztem Siebeinsatz die Leisten möglichst nahe an den benachbarten Kammerinnenwänden und weisen einen leicht gebogenen Querschnitt auf dergestalt, daß die Leisten in der Nähe der Kante, die sie mit der Siebplatte bilden, und an ihrem äußeren Rand an der Innenfläche der Saftkammer den Feststoff abdichtend anliegen.

Die Leisten können zum Führen des Einsatzes beim Einschieben
dienen, bei Ausführungsformen der Erfindung können sowohl
die Kammer als auch der Siebeinsatz besondere Mittel zum
Führen des Einsatzes beim Einschieben und zur Begrenzung der
Einschiebebewegung aufweisen.

Als ein derartiges Führungsmittel können auch die Ränder der
Aussparung dienen, die die Kammer mit dem Behälterinneren
verbindet, wenn gemäß einer Ausführungsform der Erfindung
diese Ränder die eingesetzte Siebplatte übergreifend in die
Aussparung hineinragen. Dieses Merkmal wird jedoch zweckmäßigerweise bei Ausführungsformen der Erfindung nicht verwirklicht, bei denen die Wände der Flüssigkeitskammer nicht
rechtwinklig, sondern in stumpfem Winkel von der Behälterwand abgehen.

Dadurch, daß das Sieb nicht mehr eingeschweißt ist, sondern
als herausnehmbarer Einsatz ausgebildet ist, kann das Sieb
keine Kräfte mehr über die Aussparung hinweg übertragen, die
vom Behälterinnern in die Saftkammer führt. Diesem Umstand
kann auf die verschiedenste Art und Weise Rechnung getragen
werden, wie die folgende Beispiele zeigen:

Bei einer Ausführungsform der Erfindung sind über die Aussparung hinweg an der Behälterwand befestigte Stäbe angeordnet, die ebenfalls zur Führung des Siebeinsatzes beim Einschieben dienen können, andererseits aber die in der Behälterwand verlaufenden Kräfte über die Aussparung hinweg
übertragen, also die Festigkeitseigenschaften der durch die
Aussparung geschwächten Behälterwand verbessern.

Auch kann bei Ausführungsformen der Erfindung zugunsten der
Stabilität auf eine Öffnung in der Saftkammer verzichtet
werden. Die Saftkammer ist dann an allen vier Seiten fest
mit der Behälterwand verschweißt und das herausnehmbare Sieb
ist durch Befestigungsteile, beispielsweise bewegliche
Riegel, die an der Innenwand des Behälters drehbar angeordnet sind, in der Saftkammer gehalten. Nach Lösen der Riegel
kann das Sieb aus der Saftkammer in das Behälterinnere
herausgenommen werden. Das Sieb ist bei dieser Ausführungsform in Abschnitte unterteilt, die sich durch eine
ohnehin im Behälter befindliche Aussparung, zum Beispiel das
Mannloch oder die Einfüllöffnung herausbefördern lassen.

Auch kann aus Stabilitätsgründen die Größe der Aussparung
reduziert sein, z.B. kann die Saftkammer nur auf einer
Behälterseite angeordnet sein. Diese kann entsprechend der
vorerwähnten Ausführungsform sich nahezu über die ganze
Länge des Behälters erstrecken oder aber sie kann verhältnismäßig kurz ausgeführt werden.

Diese Ausführungsform der Erfindung kann dadurch eingehend
weiter ausgebildet sein, daß sich der Querschnitt der
Saftkammer über ihre Längsausdehnung von vorne nach hinten
verjüngt.

Bei einer anderen Ausführungsform der Erfindung schließt
sich an die verhältnismäßig kurze Saftkammer ein Saftkammerkanal an, dessen Querschnitt wesentlich kleiner ist als der
Querschnitt der Saftkammer. Der Saftkammerkanal verläuft
zweckmäßigerweise von hinten nach vorne zu in Richtung auf
die Saftkammer geneigt.

Es können auch mehrere, z.B. zwei parallele Saftkammerkanäle vorgesehen sein. Bei all den Saftkammerkanälen mit geringem Querschnitt ist Voraussetzung, daß das Sieb herausnehmbar ist, denn wenn das Sieb fest eingeschweißt ist, kann wegen des kleinen Querschnittes der Raum hinter dem Sieb nicht mehr gereinigt werden.

Das im Saftkammerkanal eingesetzte Sieb kann ebenfalls seitliche Leisten aufweisen. Der in den Kanal eintretende Saft wird durch den Kanal in die Saftkammer eingeleitet, wobei der Übergang von dem Saftkammerkanal in die Saftkammer so gestaltet ist, daß an diesem Übergang keine Trester in den Kanal oder in die Saftkammer eindringen und daß der Saft aus dem Saftkammerkanal ungestört in die Saftkammer einfließt.

Selbstverständlich kann auch der Siebeinsatz im Bereich der Saftkammerkanäle durch geeignete, an der Behälterinnenwand befindliche Befestigungsmittel lösbar befestigt sein und dann ebenfalls durch eine bereits vorhandene Behälteröffnung herausgenommen werden.

Schließlich kann die Stabilität im Bereich der Aussparung für die Saftkammern dadurch verbessert werden, daß gemäß einer Ausführungsform der Erfindung die Saftkammern und die Saftkammerkanäle aus Abkantungen der Behälterwand bestehen. Dadurch wird an zwei einander gegenüberliegenden Seiten, in der Regel oben und unten an der Stelle, an der die Saftkammer in die Behälterwand übergeht, die Schweißnaht eingespart und damit auch durch diese verursachte Festigkeitseinbusen vermieden.

0072992

Die Saftkammern und -kanäle sind, wiederum um die Stabilität der Behälterwand im Bereich der Aussparung zu erhöhen, verhältnismäßig niedrig.

Die der Behälterwand parallele Außenwand der Kammer übernimmt dann einen Teil der im Bereich der Aussparung wirkenden Kräfte. Bei einer Ausführungsform einer sich über die ganze Länge des Behälters erstreckenden Kammer beträgt ihr Außenmaß etwa 625 x 100 mm x Behälterlänge.

Bei einer Ausführungsform der Erfindung weist die Flüssigkeitskammer die Form eines niedrigen Quaders auf, der nach der Bedienungsseite des Großbehälters zu eine seitliche Öffnung aufweist, und der Siebeinsatz ist nach vorne etwa in waagrechter Richtung aus der Saftkammer herausziehbar und in die Kammer einsetzbar. Dadurch kann die Kammer an den übrigen Seitenrändern fest mit der Behälterwand verschweißt sein und nur an der vorderen Stirnseite ist ein Verschluß erforderlich.

Der Verschluß der Öffnung kann in verschiedener Weise ausgebildet sein. Bei einer Ausführungsform der Erfindung weist der Siebeinsatz an seiner vorderen, der Bedienungsseite zugewandten Seitenfläche eine Leiste auf, die die Ränder der Kammer überstehende Flansche aufweist, so daß diese Leiste aus undurchlässigem Werkstoff bei eingesetztem Siebeinsatz eine Seitenwand der Flüssigkeitskammer bildet und durch eine umlaufende Dichtung gegenüber den feststehenden Kammerwänden und gegebenenfalls auch der Behälterwand abgedichtet ist. Zweckmäßigerweise weisen die feststehenden Kammerwände an dieser Stelle ebenfalls Flansche auf, so daß die Abdichtung und Befestigung der überstehenden Leiste des Siebeinsatzes auf sehr einfache Weise erfolgen kann.

Bei einer anderen Ausführungsform der Erfindung kann vor der seitlichen Öffnung ein vom Siebeinsatz getrennter Deckel angeordnet sein, der mit Spannmitteln gegen den Rand der Öffnung anpreßbar ist und der in der gelösten Stellung der Spannmittel in Führungen aus dem Bereich der Öffnung wegbewegbar und in seiner Endlage durch Anschläge gehalten ist. Diese Ausführungsform bedarf zwar eines etwas größeren Aufwandes bei der Herstellung als die soeben beschriebene Ausführungsform, dafür ist aber der Deckel sehr leicht zu lösen und abzudichten.

Diese Ausführungsform kann dahingehend weiter ausgebildet sein, daß die Führungen parallel zur Behälterwand und parallel zu der Ebene der Deckelplatte verlaufen. Der Deckel kann dann entlang der Behälterwand seitlich aus dem Bereich der Öffnung wegbewegt werden. Diese Konstruktion hat den Vorteil, daß sie einen nur geringen Platzbedarf erfordert. Bei anderen Ausführungsformen der Erfindung verlaufen die Führungen radial zur Behälterwand. Dies hat den Vorteil, daß diese Bewegung entsprechend der geringen Höhe der Flüssigkeitskammer kleiner ist als bei der unmittelbar vorgehend beschriebenen Ausführungsform.

Die Endanschläge in den Führungen können entfernbar angeordnet sein, so daß bei Bedarf der Deckel aus den Führungen herausgenommen werden kann.

Bei einer Ausführungsform weist der Deckel an seiner Außenseite Führungsmittel auf, die diesen bei Betätigung der Spannmittel in einer besonderen Haltevorrichtung rechtwinklig zu seiner Ebene führen, wobei dann diese Haltevorrichtung zusammen mit dem Deckel in den vorgenannten Führungen entweder parallel zur Behälterwand oder radial zur Behälterwand aus dem Bereich der Öffnung wegbewegbar sind. Die Haltevorrichtung kann aus einer verhältnismäßig starren und kräftigen Konstruktion bestehen, auf der sich die Spannmittel abstützen, die den Deckel auf die Öffnung der Flüssigkeitskammer pressen. Als Spannmittel können Spannschrauben oder auch Knebelverschlüsse dienen.

Vorzugsweise sind die Spannmittel so ausgebildet, daß sie nicht nur den Deckel gegen die Öffnung der Flüssigkeitskammer pressen, sondern auch zum Abziehen des Deckels von der Öffnung dienen können, was besonders dann vorteilhaft ist, wenn der Deckel an den Rändern der Öffnung klebt.

Die Erfindung kann nicht nur in Verbindung mit quaderförmigen Flüssigkeitskammern verwirklicht werden, sondern auch in Verbindung mit Großbehältern, die ein Mannloch aufweisen. Bei diesen Ausführungsformen der Erfindung schließt sich an das Mannloch ein nach außen gerichteter Stutzen an, der als Saftkammer ausgebildet ist, wobei der Siebeinsatz dann die Form eines Bechers aufweist. Bei dieser Ausführungsform ist in jedem Falle der Becher des Bodens aus einer Siebplatte gebildet, an die sich ein zylinderförmiger, nach außen gerichteter Abschnitt anschließt. Dieser Abschnitt kann aus Vollmaterial oder wiederum aus Siebwerkstoff bestehen. Der Siebeinsatz kann an seinem äußeren Ende einen Flansch aufweisen, der zwischen dem Flansch des Stutzens und einem den Stutzen nach außen verschließenden Deckel eingespannt wird und der den Auslaßstutzen für den Saft trägt.

Bei einer anderen Ausführungsform der Erfindung ist die Saftkammer vor der Entleerungsöffnung des Behälters eingebaut und zusammen mit dem Sieb von der Entleerungsöffnung wegbewegbar. Diese Ausführungsform kann dahingehend weiter ausgebildet sein, daß die Saftkammer an einem vor der Entleerungsöffnung angeordneten Schieber befestigt ist, wobei zwischen Schieber und Entleerungsöffnung noch ein Absperrschieber eingebaut ist. Die Saftkammer kann bei dieser Ausführungsform in ähnlicher Weise wie die Saftkammer vor dem Mannloch ausgebildet sein.

Der erfindungsgemäße Siebeinsatz kann bei Saftkammern sowohl für liegende als auch für stehende Tanks und für Saftkammern mit Vorteil verwendet werden, deren größte Abmesssung waagrecht oder senkrecht verläuft.

In der nachfolgenden Beschreibung sind in Verbindung mit den Zeichnungen Ausführungsbeispiele der Erfindung schematisch dargestellt. Sie zeigen nur die zum Verständnis der Erfindung wesentlichen Teile.

Es zeigen:

Fig. 1    eine Vorderansicht eines liegenden Großbehälters
          mit Flüssigkeitskammer;

Fig. 2    in vergrößertem Maßstab einen senkrechten Schnitt
          durch eine Ausführungsform einer Flüssigkeitskammer
          nach der Linie II-II der Fig. 3;

Fig. 3     einen Schnitt nach der Linie III-III der Fig. 2;

Fig. 4     eine andere Ausführungsform des Verschlusses der Öffnung der Flüssigkeitskammer, in einem Schnitt entsprechend der Fig. 3

Fig. 5     zeigt eine Draufsicht auf den Deckel der Öffnung in Richtung des Pfeiles V der Fig. 4;

Fig. 6     zeigt einen Schnitt durch eine andere Ausführungsform der Flüssigkeitskammer;

Fig. 7     zeigt schematisch eine Draufsicht einer Ausführungsform der Erfindung bei einem liegenden Tank mit Mannloch, und

Fig. 8     eine Vorderansicht der in Fig. 7 dargestellten Anordnung bei abgenommenen Deckel

Fig. 9     zeigt eine andere Ausführungsform der Erfindung in einer Seitenansicht,

Fig. 10    eine Ausführungsform der Saftkammer mit Saftkammerkanälen,

Fig. 11    zeigt einen Schnitt nach der Linie XI-XI der Fig. 10 in größerem Maßstab,

Fig. 12    zeigt ein der Fig. 11 entsprechendes Detail in anderer Ausführung;

Fig. 13    eine der Fig. 6 ähnliche Ausführungsform in verkleinertem Maßstab und

13

Fig. 14   einen Schnitt nach der Linie XIV-XIV der
          Fig. 13.

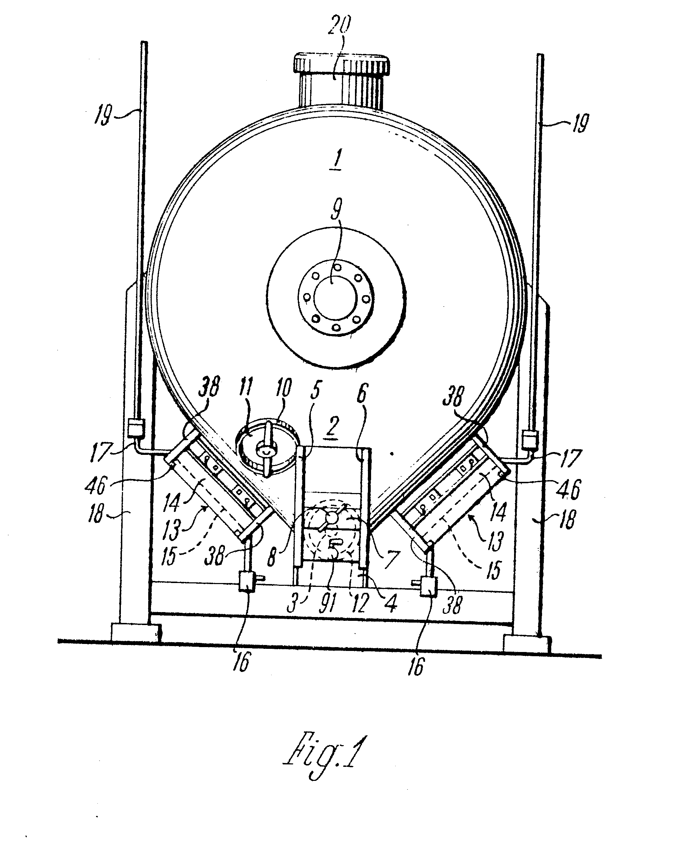

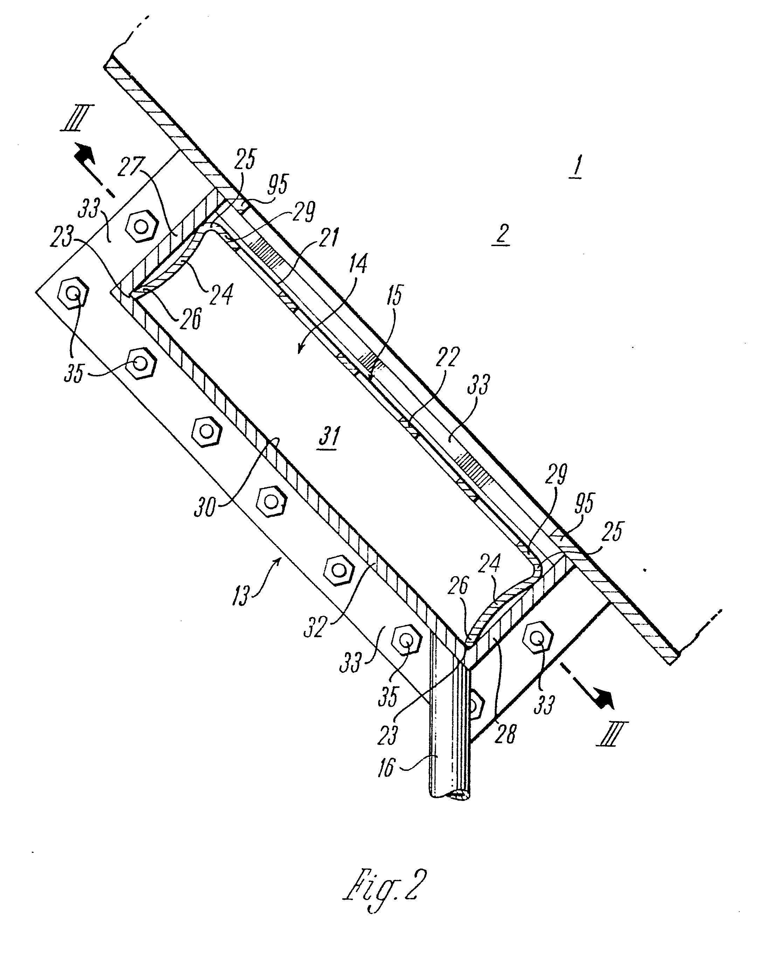

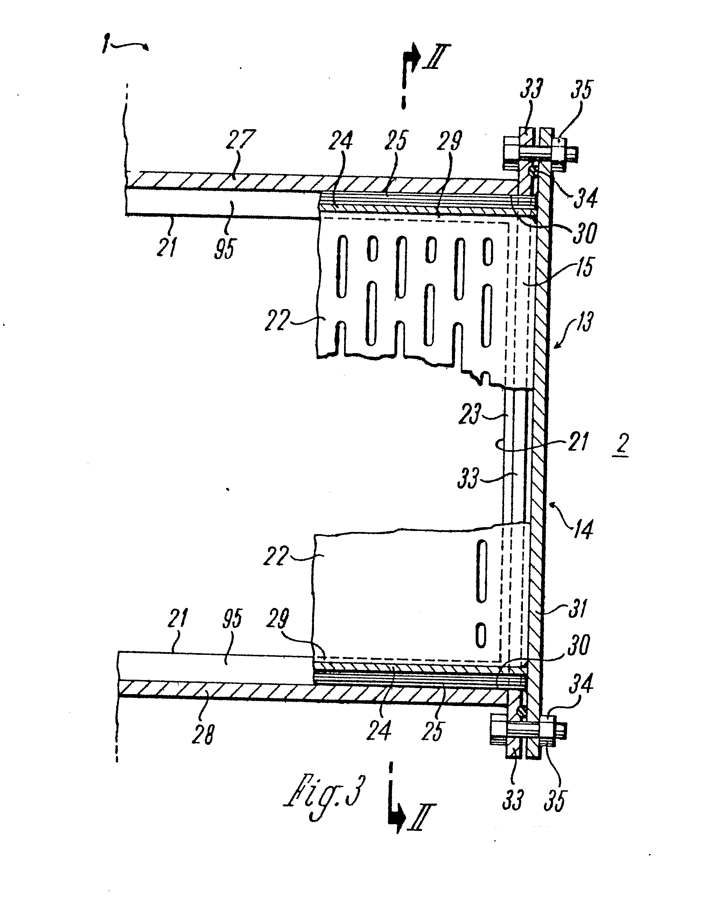

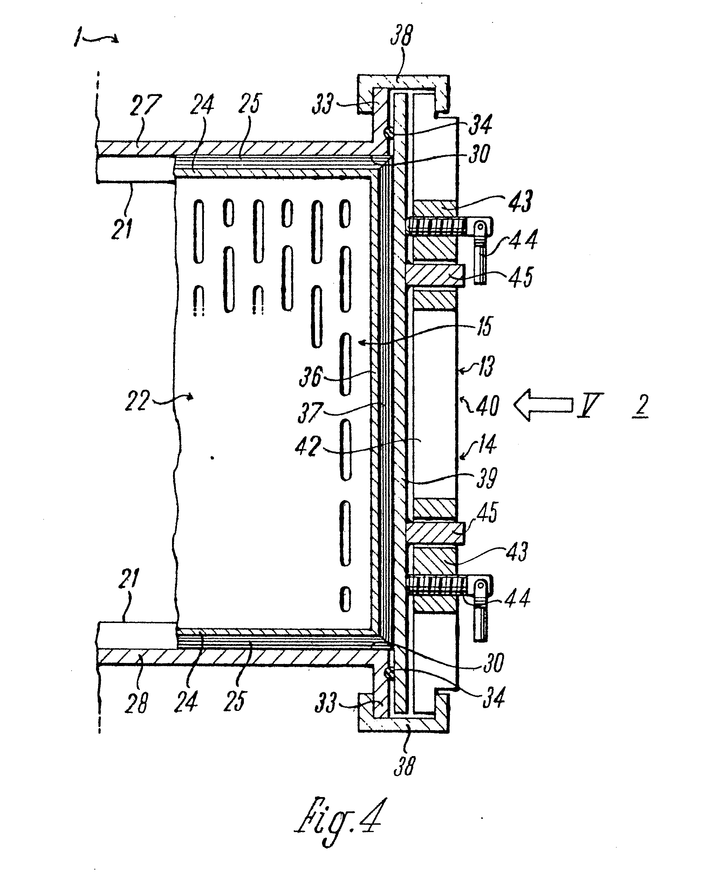

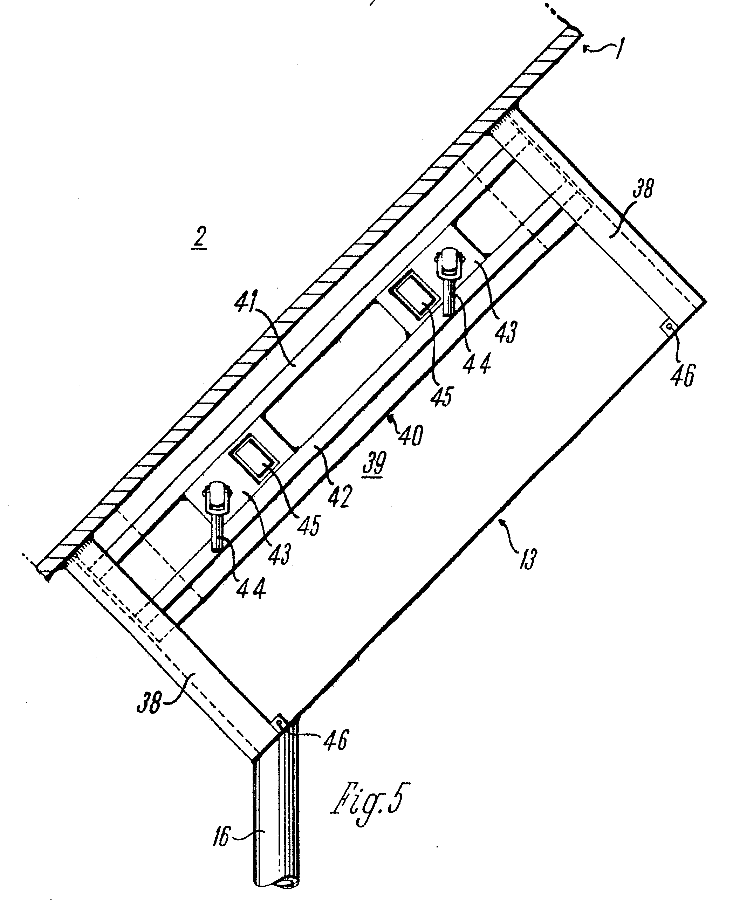

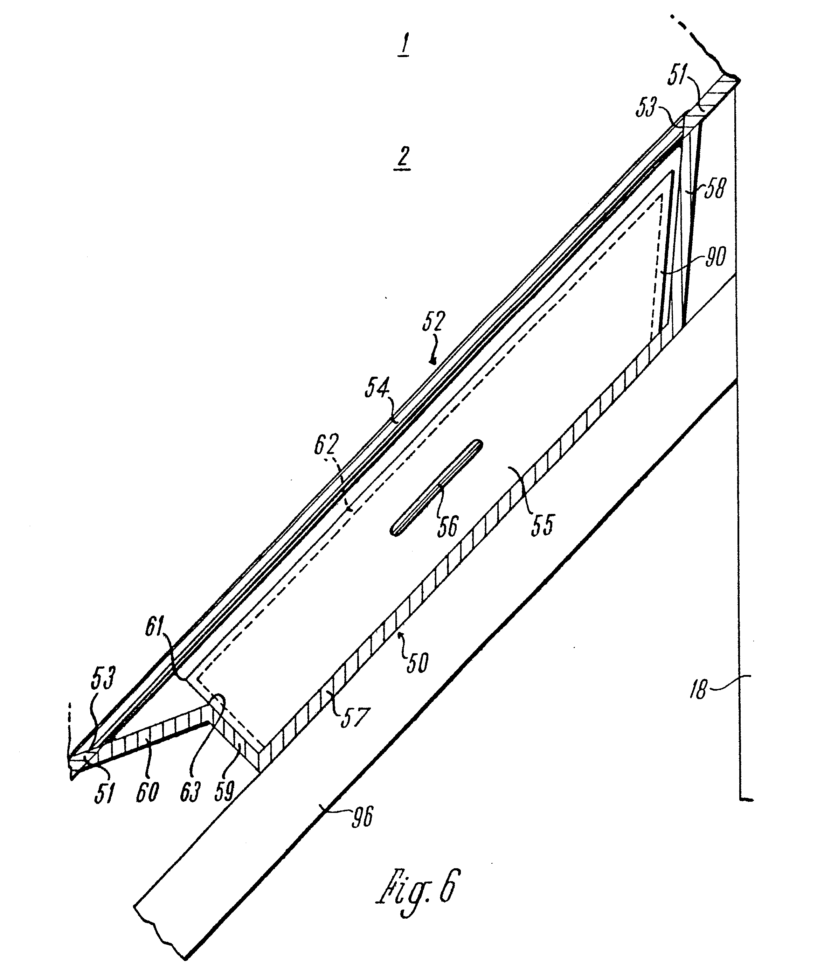

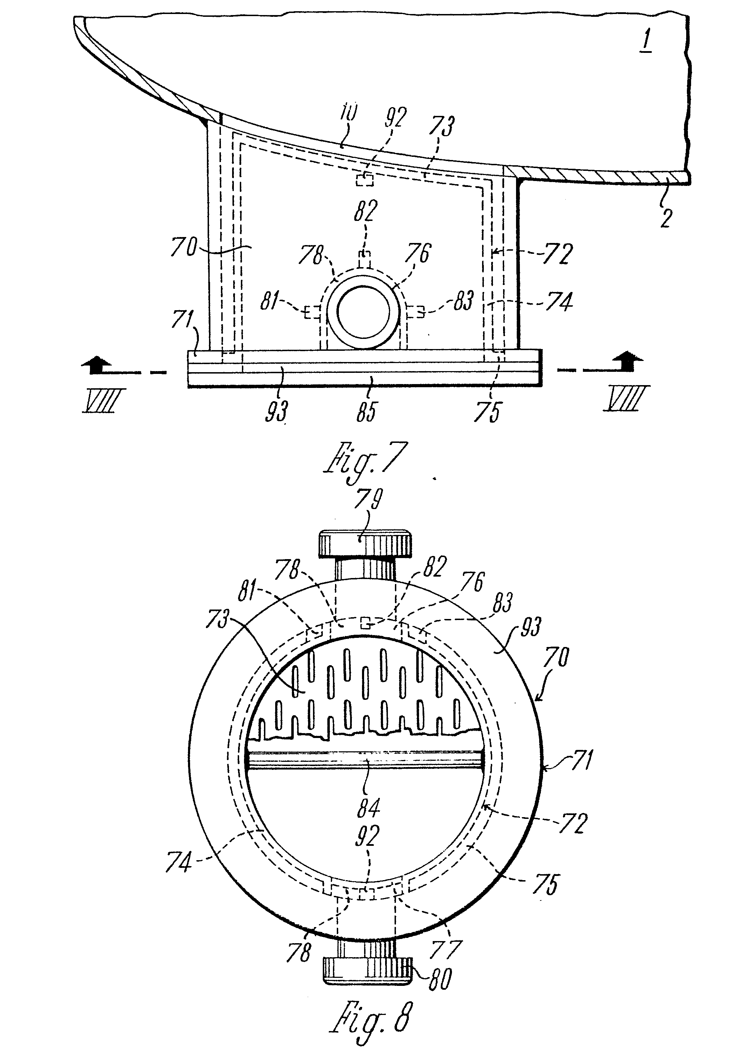

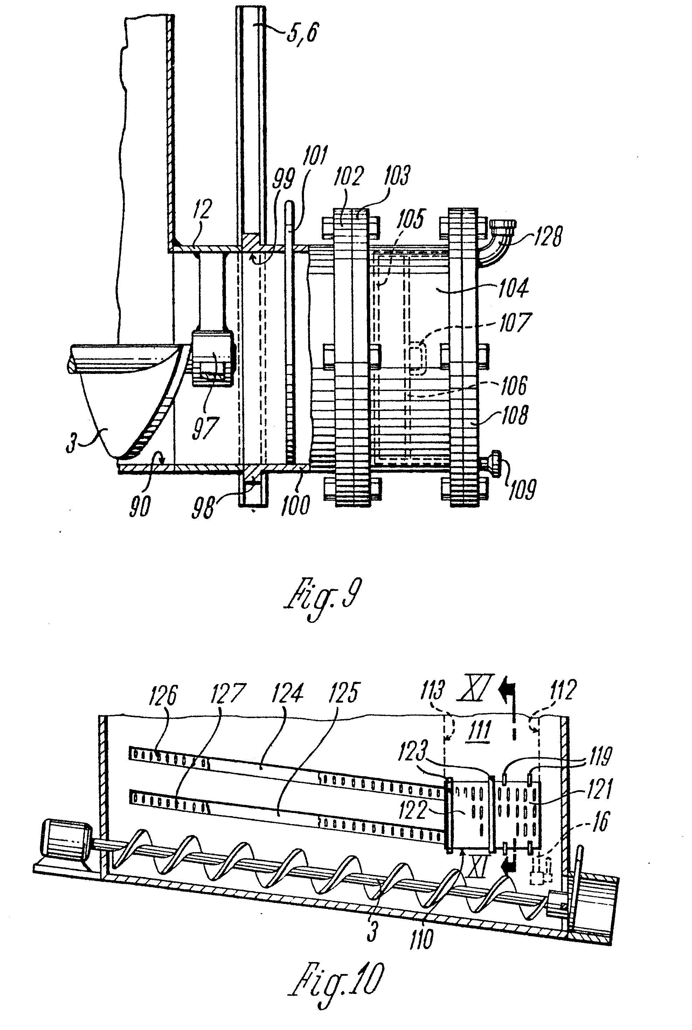

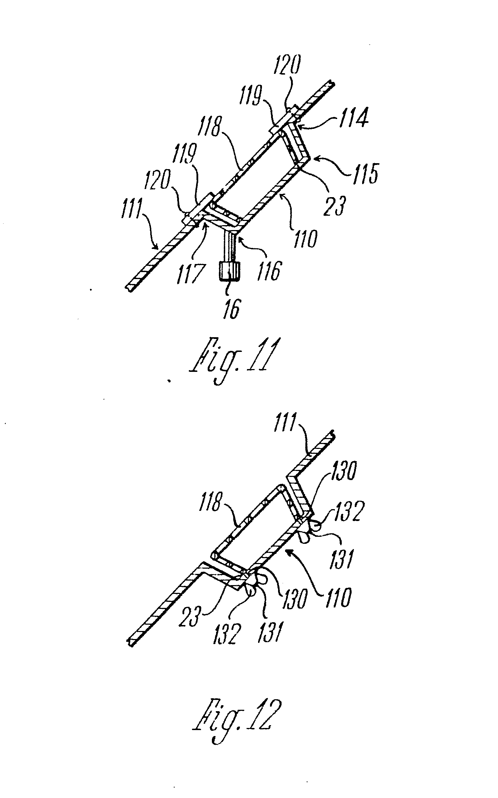

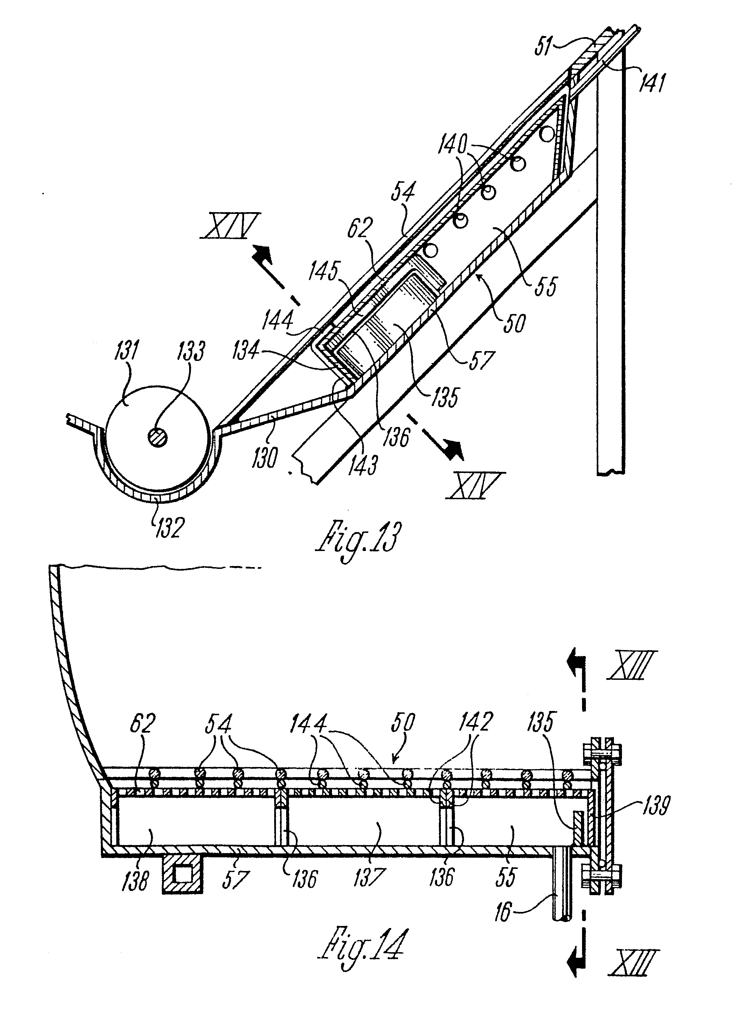

Bei der in der Zeichnung dargestellten Ausführungsform der
Erfindung ist diese in Verbindung mit einem liegenden Gärbehälter für Traubenmaische verwirklicht. Der Behälter weist
einen liegenden zylinderischen Teil 1 auf, der in seinem
unteren Teil in einen im Querschnitt V-förmigen Teil 2 übergeht. An der untersten Stelle des Teiles 2 ist eine motorisch angetriebene Förderschnecke 3 eingebaut, die in Fig. 1
gestrichelt dargestellt ist und zum Entfernen der Traubentrester aus dem Tank dient.

Im Bereich des vorderen, der Bedienungsseite des Tanks zugewandten Endes der Förderschnecke 3 ist an dem Teil 2 ein
kurzer Stutzen 12 angeschweißt, dessen vorderes Ende durch
eine Platte 4 verschließbar ist, die in zwei im Querschnitt
u-förmigen Schienen 5 und 6 an ihren seitlichen Rändern zusammen mit einer Verstärkungsleiste 7 in der Höhe verschiebbar geführt ist und in ihrer unteren Stellung mit Hilfe
einer in der Verstärkungsleiste 7 schraubbar geführten
Knebelschraube 8 gegen die Entleerungsöffnung des Tanks gepreßt werden kann, wobei sich die Verstärkungsleiste 7 in
den u-förmigen Führungsleisten 5 und 6 abstützt, die mit dem
Traggestell des Tanks und dem Tank selbst verschweißt sind.

Der Tank weist in der Mitte des zylinderischen Teils 1 ein
Rührwerk auf, dessen Lager 9 an der Stirnseite des Tanks
sichtbar ist. Außerdem weist der Tank auf der Bedienungsseite ein Mannloch 10 auf, das durch einen Deckel 11 verschließbar ist.

**0072992**

Ein an der Platte 4 angeordneter Auslaßhahn 91 dient zum
Ablassen des Saftes an der tiefsten Stelle des Tankes, wenn
der Behälter nicht mit Maische, sondern nur mit Flüssigkeit,
z. B. Wein oder Saft gefüllt ist.

An den beiden Außenwänden des V-förmigen Teils 2 sind sich
über die ganze Länge des Tanks erstreckende Flüssigkeitskammern 13 angeordnet, z.B. angeschweißt oder sind ihre
obere und ihre untere Wand durch Abkantungen aus der Behälterwand hergestellt. Ihre vorderen, der Bedienungsseite des
Tanks zugewandten Enden sind offen und je mit einem Deckel
14 verschließbar. Die Wand des Tanks weist im Bereich dieser
Flüssigkeitskammern 13 eine Aussparung 21 auf und in den
Flüssigkeitskammern befindet sich ein als Ganzes mit 15 bezeichneter Siebeinsatz (Fig. 2), der für die Traubentrester
undurchlässig ist, so daß sich der Saft in der Flüssigkeitskammer 13 sammelt und durch eine Auslaufleitung 16 mit eingesetztem Absperrventil abfließen kann. Am oberen Ende der
Flüssigkeitskammer befindet sich ein Entlüftungsstutzen 17,
der an der vorderen Säule 18 der Tragkonstruktion befestigt
ist und dort mit einem Schauglasrohr 19 verbunden ist, das
bis über die Einfüllöffnung 20 des Tanks hinaufragt und zugleich als Füllstandsanzeiger für den Tankinhalt dient.

Die Flüssigkeitskammern 13 haben die Form eines niedrigen
Quaders. Der Siebeinsatz 15 weist an seiner einer Aussparung
21 in der Tankwand zugewandten Seite eine Siebplatte 22 auf,
die aus einem Schlitzblech besteht. Die Siebplatte 22 verläuft etwa parallel zu der Innenfläche des V-förmigen Teils
2 des Behälters und weist an ihren Seitenrändern rechtwinklig zu der Siebplatte 22 nach außen, also vom Tankinneren weg, verlaufende Leisten 24 auf. Diese Leisten sind nach innen durchgebogen, so daß sie nur im Bereich der abgerundeten Kante 25 zwischen der Siebplatte 22 mit Spiel und den Leisten 24 sowie an den von der Siebplatte 22 abgewandten Enden 26 an den Innenflächen der Flüssigkeitskammer 13 anliegen. Hierdurch wird der Siebeinsatz beim Einschieben und Herausnehmen geführt.

Fig. 2 zeigt einen senkrechten Schnitt durch die Flüssigkeitskammer 13 in einem Abstand vom vorderen Ende und zwar von hinten nach vorne gesehen. Die Enden 26 der Leisten 24 liegen an der oberen Wand 27 der Flüssigkeitskammer 13 bzw. der unteren Wand 28 der Flüssigkeitskammer 13 an und dichten durch Anlage ihrer Stirnflächen 23 an der Innenfläche der Außenwand 32 den Innenraum der Flüssigkeitskammer 13 gegen das Eindringen von Traubentrester ab. Die Flächen 23 werden durch den Druck, den die im Behälter befindlichen Trester auf den Siebeinsatz ausüben, zur Abdichtung nach unten gedrückt. Am hinteren Ende der Siebplatte 22 ist ebenfalls eine Leiste 24 vorgesehen, deren Querschnitt in gleicher Weise gebogen verläuft wie die in Fig. 2 gezeigten Leisten 24, so daß die gebogene Kante 25 und das Ende 26 dieser Leiste an der Rückwand der Flüssigkeitskammer anliegt.

Außer der wulstförmig abgebogenen Kante 25 und dem Ende 26 können auch andere Führungsmittel vorgesehen sein, die gewährleisten, daß der schubkartenförmige Siebeinsatz 15 beim Einsetzen in die Flüssigkeitskammer geführt ist. Die Leisten 24 können ebenfalls aus Schlitzblechen bestehen, sie können jedoch auch aus undurchlässigem Edelstahlblech bestehen. Die Höhe der Leisten 24 entspricht etwa der entsprechenden Dimension der Flüssigkeitskammer 13. Auch kann der Siebeinsatz 15 so ausgebildet sein, daß entweder das Ende 26 oder die gebogene Kante 25 oder aber der Rand 29 der Siebplatte 22 dichtend an dem benachbarten Teil 27, 28, der Kammer bzw. der Behälterwand anliegt.

Die Flüssigkeitskammern 13 weisen an ihrem vorderen, der Bedienungsseite zugewandten Ende eine Öffnung 30 auf, die auf verschiedene Weise verschlossen werden kann. In Fig. 3 ist eine besonders einfache Ausführungsform der Erfindung dargestellt. Bei dieser Ausführungsform ist die vordere Leiste des Siebeinsatzes 15 als starrer Deckel 31 ausgebildet, dessen Ränder die Ränder der Öffnung 30 der Flüssigkeitskammern 13 allseitig übergreifen, wobei die Stirnflächen der oberen und unteren Wände 27, 28 sowie der Seitenwand 32 der Flüssigkeitskammer an ihrem vorderen Ende einen Rahmen 33 tragen, der unter Zwischenlage einer Dichtung 34 zur Anlage der Ränder des Deckels 31 dient. Der Rahmen 33 ist auch an der Behälterwand angeschweißt, so daß die Öffnung 30 von der Behälterwand einen der Höhe des Rahmenschenkels entsprechenden Abstand hat. Der Siebeinsatz 15 wird nach dem Einschieben dadurch in der Flüssigkeitskammer 13 befestigt, daß die Deckelplatte 31 an dem Rahmen 33 durch Schrauben 35 festgezogen wird. Die Ränder 95 der Aussparung 21 übergreifen die Ränder der Siebplatte 22, so daß die Aussparung 21 also etwas kleiner ist als die Siebplatte 22 und die Siebplatte 22 beim Einschieben in die Flüssigkeitskammer 13 nicht in das Innere des Tanks fallen kann.

In Fig. 4 ist eine andere Ausführungsform eines Verschlusses der vorderen Öffnung 30 dargestellt. Der Siebeinsatz 15 weist auch an seiner Vorderseite eine der hinteren, oberen und unteren Leiste des Siebeinsatzes 15 entsprechende Leiste 36 auf, wobei diese eine der gewölbten Kante 25 entsprechend gewölbte Kante 37 aufweist, die an die Siebplatte 22 anschließt. Vor der Öffnung 30 sind von der Außenwand des V-förmigen Teils des Tanks radial abstehende, im Querschnitt U-förmige Führungsschienen 38 angeschweißt, in denen ein in den Maßen etwa mit der Deckelleiste 31 übereinstimmender Deckel 39 und eine Haltevorrichtung 40 parallel zur Ebene der Öffnung 30 derart verschiebbar ist, daß der Deckel 39 aus dem Bereich der Öffnung 30 vollständig entfernbar ist. Am äußeren Ende der Führungsschienen 38 befindet sich ein entfernbarer Anschlag 46 (Fig. 5) der einen in ein Auge einsteckbaren Stift aufweist, so daß die aus dem Deckel 39 und der Haltevorrichtung 40 bestehende Anordnung bei Bedarf ganz aus den Führungsschienen 38 herausgenommen werden kann.

Die Haltevorrichtung 40 besteht aus zwei parallel verlaufenden Stäben 41 und 42 (Fig. 5), deren äußere Enden in der Führungsschienen 38 geführt sind und die durch eingeschweißte Platten 43 miteinander verbunden sind. In diesen Platten 43 sind Anpreßschrauben 44 verschraubbar geführt, mit denen der Deckel 39 gegen die Ränder 33 der Öffnung 30 gepreßt werden kann. An dem Deckel 39 sind noch Führungsbolzen 45 angeschweißt, die zwischen den Stangen 41 und 42 der Haltevorrichtung 40 oder in der Platte 43 geführt sind und eine gemeinsame Bewegung der Haltevorrichtung 40 mit dem Deckel 39 in den Führungsschienen 38 gewährleisten. Statt mit den

Anpreßschrauben 44 kann der Deckel 39 auch mit in der Haltevorrichtung 40 gelagerten Exzenterhebeln oder dergl. gegen die Öffnung 30 gedrückt werden. Das vordere Ende der Anpreßschrauben kann, aber drehbar axial unverschiebbar im Deckel 39 gelagert sein, so daß beim Aufschrauben der Schraube 44 der Deckel von der Öffnung weggezogen wird.

Fig. 6 zeigt eine Ausführungsform der Erfindung, bei der der Querschnitt der Flüssigkeitskammer 50 nicht quaderförmig ist sondern eine etwas andere Querschnittform aufweist. Die Flüssigkeitskammer 50 ist wieder an der Außenwand 51 des V-förmigen Teils 2 des liegenden Tanks 1 angeordnet. Im Bereich der Flüssigkeitskammer 50 weist die Wand 51 eine Aussparung 52 auf, die bei dieser Ausführungsform der Erfindung durch die Öffnung 52 überbrückende, an den Rändern 53 der Wand 51 angeschweißte Stäbe 54 überbrückt ist, die gewährleisten, daß die Wand 51 trotz der Aussparung 52 etwa die gleichen Kräfte aufnehmen kann als wenn die Aussparung 52 an dieser Stelle nicht vorgesehen wäre. Diese Stäbe können auch verhindern, daß der Siebeinsatz beim Einschieben und während des Betriebes des Rührwerkes nach innen wandert.

In der Flüssigkeitskammer 50 befindet sich wieder ein Siebeinsatz 55, der einen Handgriff 56 trägt. Die äußere Wand 57 der Flüssigkeitskammer 50 verläuft parallel zur Innenfläche der Wand 51 und stützt sich, die Kammer und zum Teil auch den Tank auf der Schrägstütze 96 der Tragkonstruktion ab. Die obere Seitenwand 58 der Flüssigkeitskammer 50 verläuft jedoch nicht rechtwinklig zu der äußeren Wand 57, wie dies bei den im vorhergehenden beschriebenen Ausführungsformen der Fall ist, sondern in einem stumpfen Winkel zur Innenfläche der Behälterwand 51, also von der Außenwand 57 schräg nach oben. Dies hat den Vorteil, daß Reinigungsgeräte, die zum Säubern der Innenfläche der Wand 51 verwendet werden, bei herausgenommenem Siebeinsatz 55 von oben auch in das Innere der Flüssigkeitskammer 50 eingreifen können, ohne durch rechtwinklige Kanten behindert zu sein. Die untere Seitenwand 59 erstreckt sich in einem der äußeren Wand 57 benachbarten Abschnitt rechtwinklig von dieser Wand weg, weist dann aber einen schräg zu der Behälterwand 51 zulaufenden Abschnitt 60 auf, der wiederum mit der Innenfläche der Wand 51 einen stumpfen Winkel bildet. Die Kante 61 des Siebeinsatzes 55 zwischen der dem Tankinneren zugewandten Siebplatte 62 und der der Wand 59 benachbarten seitlichen Leiste liegt höher als die Kante 63 zwischen den Anschnitten 59 und 60, so daß zwischen dem Wandabschnitt 60 und der Kante 61 ein kleiner freier Raum entsteht, der das Herausziehen des Siebeinsatzes 55 begünstigt.

Bei der in den Fig. 7 und 8 dargestellten Ausführungsform der Erfindung ist das Mannloch 10 als Flüssigkeitskammer ausgebildet. Hierzu ist an das Mannloch 10 ein nach außen ragender Stutzen 70 angeschweißt, der an seinem vorderen Ende einen kreisförmigen Flansch 71 trägt. Der Siebeinsatz 72 weist an seinem dem Tankinneren zugewandten Ende eine Siebplatte 73 auf, die die Form der Innenwand des Tankes aufweist. An die Ränder der Siebplatte 73 ist ein zylindermantelförmiger Ansatz 74 angeschweißt, der in seinem hinteren Ende ebenfalls einen Flansch 75 trägt. Der Teil 74 kann aus Siebblech, also Schlitzblech, oder aus undurchlässigem Material bestehen.

Der zylindermantelförmige Teil 74 des Schlitzbleches weist
an seiner oberen Seite einen u-förmigen Einschnitt 76 und an
einer unteren Seite einen u-förmigen Einschnitt 77 auf. Entlang der Ränder der Einschnitte 76 und 77 weist der Siebeinsatz 72 eine Leiste 78 auf, deren obere Stirnfläche sich
dichtend an die Innenwand des Stutzens 70 anlegt. Im Bereich
dieser Einschnitte 76 und 77 befindet sich im Stutzen 70
oben eine Entlüftung 79 und unten ein Saftauslaß 80. Außerdem befinden sich oben an der Innenfläche des Stutzens 70
Anschlagnocken 81, 82, 83, die mit der Randleiste 78 zusammenarbeiten. Die Anschlagnocken 81 und 83 dienen zur Führung
des Siebeinsatzes 72 beim Einschieben, die Anschlagnocke 82
begrenzt die Einschiebebewegung, wenn die Randleiste 78 an
ihr zur Anlage kommt. An der Unterseite des Teiles 74 befindet sich ein Fuß 92, der einen Abstand zwischen der unteren
Außenfläche des Teiles 74 und der Innenfläche des Stutzens
70 gewährleistet. Eine quer durch den zylinderischen Teil 74
des Siebeinsatzes 72 verlaufende Leiste 84 bildet einen
Handgriff zum Herausnehmen des Siebeinsatzes 72. Die äußere
Öffnung des Stutzens 70 wird durch einen Deckel 85 verschlossen, der unter Zwischenlage einer Dichtung 93 beispielsweise mit in der Zeichnung nicht dargestellten Schrauben, Spannhebeln oder anderen Befestigungsvorrichtungen an
der äußeren Öffnung des Stutzens befestigt werden kann.

Die Ausführungsform nach Fig. 9 unterscheidet sich von der
Ausführungsform nach Fig. 7 und 8 im wesentlichen dadurch,
daß die Saftkammern nicht vor dem Mannloch 10 sondern vor
der Entleerungsöffnung 90 im Bereich des vorderen Endes
einer Förderschnecke 3 angeordnet ist, das in einem im
Stutzen 12 befestigten Lager 97 gelagert ist. An den Stutzen 12 schließen sich wiederum zwei im Querschnitt U-förmige Schienen 5 und 6 an, die die seitlichen Ränder einer Platte 98 führen, die in diesen Führungen vor die Öffnung des Stutzens 12 geschoben werden kann. Die Platte 98 weist eine Durchgangsöffnung 99 auf, an deren Rand wiederum ein rohrförmiges Teil 100 angeschweißt ist, in dem ein Absperrschieber 101 eingeschaltet ist. Der Absperrschieber ist in der Zeichnung lediglich der Einfachheit halber als Platte dargestellt, seine Konstruktion entspricht jedoch den üblichen Absperrschiebern.

Am vorderen Ende des Rohrstückes 100 ist über Flanschen 102 und 103 eine Saftkammer 104 angeflanscht, die wiederum eine zylindermantelförmige Wand und in ihrem Inneren einen Siebeinsatz 105 aufweist. Dieser ist wie der Siebeinsatz 74 bei der Ausführungsform nach Fig. 7 etwa korb- oder becherförmig ausgebildet und weist eine sich quer über seinen Innendurchmesser erstreckende Halteleiste 106 auf, an der ein Handgriff 107 befestigt ist. Die Saftkammer 104 ist über Flanschen mit einem Deckel 108 verschlossen, an dem ein Saftauslaßstutzen 109 und ein Entlüftungsstutzen 128 vorgesehen sind.

Die ganze aus den Teilen 98, 100, 104 und 105 bestehende Einheit kann in den Führungsschienen 5, 6 vor die Entleerungsöffnung 90 geschoben oder aus dem Bereich dieser Öffnung vollständig weggeschoben werden.

Diese Ausführungsform der Erfindung kann mit besonderem Vorteil bei Behältern verwirklicht sein, die für einen Behälterinhalt eingesetzt werden, dessen flüssige und dessen feste Stoffe gut voneinander trennbar sind, beispielsweise für die Rotwein-Maische-Vergärung. Über diese Entleerungsöffnung 90 kann also zuerst der Saft entnommen werden und dann werden nach dem Wegschieben der Saftkammer aus dem Bereich der Entleerungsöffnung 90 die dicken Stoffe über diese Entleerungsöffnung ausgetragen.

Die Ausführungsform nach Fig. 10 bezieht sich wieder auf seitlich an der Behälterwand angeordnete Saftkammern, jedoch mit dem Unterschied, daß die Wände der Saftkammer 110 soweit möglich aus einem Blechzuschnitt 111 der Behälterwand durch Abkanten geformt ist. Die Saftkammer 110 erstreckt sich vom einen Rand 112 bis zum anderen Rand 113 des die Behälterwand bildenden Blechzuschnittes 111, dessen Länge dem gesamten Umfang des V-förmigen unteren Teiles 2 des Tankes entsprechen kann. Es entfällt dann die Schweißnaht an den Kanten 114 bis 117, so daß die Festigkeit des Werkstoffes an diesen Stellen nicht durch eine Schweißnaht beeinträchtigt sondern durch die Abkantung eher noch verfestigt wird. Die übrigen Teile der Kammer können ausgebildet sein wie die Kammern gemäß den Fig. 2 bis 4. Bei der Ausführungsform nach Fig. 11 ist jedoch die beim Abkanten des Blechzuschnittes 111 verbleibende vordere Öffnung und hintere Öffnung der Saftkammer durch einen Deckel nachträglich zugeschweißt, so daß auch hierdurch die Stabilität dieses Bereiches des Tankes sehr groß ist. Der Siebeinsatz 118 ist in diesem Falle durch Riegel 119 gehalten, die an der Innenfläche der Behälterwand 111 um in der Wand befestigte Achsbolzen 120 schwenkbar gelagert sind. Der Siebeinsatz 118 ist in Abschnitte 121 und 122 unterteilt, die nach dem Lösen der Befestigungsmittel 119 nach innen abgenommen werden können und nur so groß sind, daß sie durch das Mannloch 10 oder eine andere Öffnung des Behälters heraustransportiert werden können.

Bei der dargestellten Ausführungsform der Erfindung sind die Riegel 119 lediglich an dem vorderen Abschnitt 121 vorgesehen. Der anschließende Abschnitt 122 wird durch die Saftkammer 110 überbrückende Leisten 123 in der Saftkammer gehalten, die einerseits den vorderen und den hinteren Rand des Siebabschnittes 122 übergreifen andererseits wiederum der Verstärkung des Wandabschnittes im Bereich der Kammer 110 dienen. Ist der Siebabschnitt 121 nach Lösen der Riegel 119 herausgenommen, so läßt sich der Siebabschnitt 122 nach vorne an den Platz des herausgenommenen Siebabschnittes 121 schieben und ebenfalls herausnehmen.

Bei der in Fig. 10 dargestellten Ausführungsform erstreckt sich die Saftkammer 110 nur über einen verhältnismäßig kurzen Abschnitt am vorderen Ende des Tankes. An ihrem rückwärtigen Ende schließen sich an die Saftkammer 110 Saftkammerkanäle 124 und 125 an, die in der gleichen Weise wie die Saftkammer 110 aus den Blechzuschnitten durch Abkanten geformt sind, die die Behälterwand bilden. Die Kanäle 124 und 125 laufen von hinten nach vorne geneigt und sie sind gegen den Innenraum des Behälters durch leistenförmige Siebbleche 126 und 127 abgedeckt, die wiederum nach Lösen von nichtgezeichneten Befestigungsmitteln nach innen herausnehmebar sind und durch eine ohnehin vorhandene Öffnung im Tank nach außen transportiert werden können. Der Übergang von den Saftkammerkanälen 124 und 125 in die Saftkammer 110 ist so gestaltet, daß an diesem Übergang keine Trester in den Kanal oder in die Saftkammer eindringen und daß der Saft aus dem Saftkammerkanal ungestört in die Saftkammer einfließt.

Die Befestigungsmittel, die den Siebeinsatz 118 in der Flüssigkeitskammer 110 halten, können, wie in Fig. 11 dargestellt, vom Behälterinnern aus betätigbar sein, sie können jedoch auch von der Tankaußenseite betätigbar sein. Das letztere kann beispielsweise dadurch verwirklicht sein, daß die Riegel 119 und der Bolzen 120 starr miteinander verbunden sind, der Bolzen 120 unverlierbar in der Behälterwand drehbar gelagert ist und von außen so gedreht werden kann, daß der Riegel 119 die Ränder des Siebeinsatzes 118 nicht mehr übergreift. Auch können an der äußeren Stirnseite 23 des schubkastenartigen Siebeinsatzes Gewindebolzen 131 befestigt sein, deren Gewinde durch eine Bohrung 130 in der Wand der Flüssigkeitskammer nach außen ragt. Auf das Gewinde können dann zum Befestigen des Siebeinsatzes unter Zwischenlegen einer Dichtung Muttern 132 aufgeschraubt werden. Bei abgenommenen Muttern kann der Siebeinsatz 118 dann radial nach innen aus der Kammer 110 herausgezogen werden. Diese Ausführungsform der Erfindung hat den Vorteil, daß aus der Innenfläche der Behälterwand keine Teile herausragen und daher die Reinigung des Behälters nicht behindern können.

Die Fig. 13 und 14 zeigen eine der Fig. 6 ähnliche Ausführungsform, die sich von dieser dadurch unterscheiden, daß
die der unteren Seitenwand 59 entsprechende Wand 130 keine
Abwinklung aufweist, sondern von der äußeren Wand 57 weg
schräg zu der Austragschnecke 131 hin verläuft und mit der
Innenfläche der Wand 51 einen stumpfen Winkel bildet. Der
Siebeinsatz 55 wird durch längs des Siebeinsatzes verteilt
angeordnete Haken 143 gehalten, die in der äußeren Wand 57
befestigt sind und mit ihrem oberen abgewinkelten Ende 144
die Siebplatte 62 übergreifen. Die eingeschweißten Haken 143
ersetzen den Führungsabschnitt 59 der Ausführungsform nach
Fig. 6.

Der Wandabschnitt 130 verläuft zweckmäßig nach unten geneigt. Diese Neigung kann verschieden groß sein, zweckmäßig
so, daß sich in diesem Raum absetzende Teile nach unten
abfließen, insbesondere beim Reinigen des Behälters mit dem
Wasserstrahl nach unten weggeschwemmt werden. Die Wand 130
trifft an die eine Austragschnecke 131 seitlich und unten
begrenzende Behälterwand 132 oberhalb der Schneckenachse
133, damit die Schnecke die Trester beim Herausschaffen
nicht in den Raum oberhalb des Wandabschnittes 130 hineindrückt.

Bei einer Ausführungsform verläuft die Flüssigkeitskammer 50
über die ganze Länge des Tanks. Der Siebeinsatz 55 kann
einstückig ausgebildet sein, vorzugsweise ist er jedoch
mehrstückig derart ausgebildet, daß mehrere Siebeinsätze 55,
137, 138 hintereinander angeordnet sind. Um zu verhindern,
daß in der durch die als Siebfläche oder als Vollwand ausgebildeten Seitenwand 134 und der Wand 57 der Flüssigkeiskammer 50 gebildeten Ecke sich festsetzende Trubteile beim Herausziehen der Siebeinsätze mit nach außen gezogen und dort
außerhalb der Flüssigkeitskammer auf den Boden fallen, ist
in unmittelbarer Nähe der Wand 134 des Siebeinsatzes 55 ein
von der Wand 57 nach innen, z.B. bis auf etwa 1/2 der Höhe
des Einsatzes 55, 137, 138 ragender Abstreifer 135 an der
Wand 57 befestigt, vorzugweise angeschweißt. Dieser Abstreifer kann sich entlang der Wand 57 über 1/4 bis 3/4 der
Breite der Kammer 50 erstrecken. Beim Herausziehen des
Siebeinsatzes 55 streift der Abstreifer 135 den in dieser
Ecke der Kammer und mit seinem der Wand 134 benachbarten
Rand an der Innenfläche der Wand 134 abgesetzten Trub ab, so
daß dieser im Behälter bleibt. Damit der Siebeinsatz 55
vollständig aus der Flüssigkeitskammer herausgezogen werden
kann, ist es erforderlich, daß die hintere Stirnwand 142 des
Siebeinsatzes 55 eine Aussparung 136 aufweist. Die vordere
Stirnwand 139 des vordersten Siebeinsatzes 55 weist keine
Aussparung 136 für den Abstreifer 135 auf, weil der Abstreifer 135 innerhalb des Siebeinsatzes 55 hinter der Wand 139
angeordnet ist.

Die Siebeinsätze 55, 137 und 138 weisen an ihren Stirnwänden
142 mit Ausnahme der vorderen Stirnwand 139 des vordersten
Siebeinsatzes 55 Aussparungen 140 auf, die als Bohrungen
ausgebildet sein können. Diese Bohrungen dienen zur Entlüftung und auch dazu, daß der Saft beim Ablassen durch die
Stirnwände 142 der Kammern 55, 137, 138 hindurchfließen
kann. Schließlich können die innenliegenden Siebabschnitte
137 und 138 mit Hilfe eines in eine Aussparung 140 eingeführten Hakens herausgezogen werden. Je ein Entlüftungsrohr
141 mündet vorn und hinten jeweils oben in die Flüssigkeitskammer 50.

Die Stirnwände 142 der Siebeinsätze 55, 137, 138 sind im
Bereich der Aussparungen 140 durch ein eingschweißtes Teil
145 verstärkt.

Der Abstreifer 135 ist zweckmäßig 20 - 70 cm hinter dem
vorderen Ende der Flüssigkeitskammer angeordnet. Bei sehr
tiefen (langen) Flüssigkeitskammern können auch mehrere
Abstreifer in Abständen hintereinander vorgesehen sein.

Die in Verbindung mit den Fig. 13 und 14 erläuterten Merkmale können auch in Verbindung mit einer Kammer verwirklicht
sein, die in ihrem oberen Bereich einen rechtwinkligen
Querschnitt aufweist.

Die erfindungsgemäßen Tanks können beispielsweise mit einem
Fassungsvermögen zwischen 5 000 und 100 000 Liter hergestellt werden, wobei als Werkstoff in erster Linie Edelstahl
oder Stahl verwendet wird. Soweit es die Größe des Tankes
zuläßt können die Tanks auch aus Kunststoff ausgeführt
werden.

Die Erfindung eignet sich nicht nur für Behälter, die im
Weinbau und bei der Alkohol- und Saftherstellung verwendet
werden, sondern auch für in der Brauerei verwendete Behälter.

Patentansprüche

1. Großbehälter für ein Stoffgemisch aus einer Flüssigkeit und einem aussiebbaren Feststoff, insbesondere
Gärbehälter für Traubenmaische, mit einem an einer
Aussparung der Behälterwand angeordnetem Sieb und
einer außen an der Behälterwand angeordneten, durch
das Sieb von dem Behälterinnenraum abgetrennten Flüssigkeitskammer mit Auslauf für die Flüssigkeit, dadurch gekennzeichnet, daß das Sieb als beweglicher,
aus der Kammer (13) herausnehmbarer Einsatz (15) ausgebildet ist..

2. Behälter nach Anspruch 1, dadurch gekennzeichnet, daß
der Siebeinsatz (15) eine Siebplatte (22), und an
ihren Seitenrändern im Winkel zu der Platte (22) nach
außen verlaufende Leisten (24) aufweist.

3. Behälter nach Anspruch 2, dadurch gekennzeichnet,
daß zumindest die Leiste (90) am oberen Rand des
Siebeinsatzes (55) sowie die benachbarte Wand (58)
der Flüssigkeitskammer (55) einen spitzen Winkel
zu der Behälterwand bildet.

4.  Behälter nach Anspruch 3, dadurch gekennzeichnet, daß die untere Wand der Flüssigkeitskammer (50) einen an die Behälterwand (51) im stumpfen Winkel anschließenden Wandabschnitt (60) und hieran einen rechtwinklig zur Behälterwand (51) verlaufenden Abschnitt (59) aufweist.

5.  Behälter nach einem der vorhergehenden Ansprüche außer 3 und 4, dadurch gekennzeichnet, daß die Ränder (23) der Aussparung (21), die die Flüssigkeitskammer (13) mit dem Behälterinneren verbindet, Ränder der eingesetzten Siebplatte (22) übergreifen.

6.  Behälter nach einem der vorhergehenden Ansprüche, dadurch gekennzeichnet, daß über die Aussparung (21, 52) hinweg an der Behälterwand befestigte Verstärkungsstäbe (54) verlaufen.

7.  Behälter nach einem der vorhergehenden Ansprüche, dadurch gekennzeichnet, daß die Flüssigkeitskammer (13, 50, 70) nach der Bedienungsseite zu eine Öffnung (30) aufweist, und daß der Siebeinsatz (15, 55, 74) nach vorne etwa in waagrechter Richtung aus der Kammer (13, 50, 70) herausziehbar und einsetzbar ist.

8.  Behälter nach einem der vorhergehenden Ansprüche, dadurch gekennzeichnet, daß der Siebeinsatz (15) an einer Seitenfläche eine Leiste (31) aufweist, die an den Rändern (33) der Öffnung (30) der Kammer bei eingesetztem Siebeinsatz (15) anliegt und eine Seitenwand der Kammer bildet, wobei eine Dichtung (34) zwischen den Rändern der feststehenden Kammerwände und der Leiste (31) vorgesehen ist.

9. Behälter nach Anspruch 7 , dadurch gekennzeichnet, daß
vor der Öffnung (30) der Kammer (15) ein Deckel (39)
angeordnet ist, der mit Spannmitteln (44) gegen den
Rand der Öffnung (30) anpreßbar ist und der in der
gelösten Stellung der Spannmittel (44) in Führungen
(38) aus dem Bereich der Öffnung wegbewegbar ist.

10. Behälter nach Anspruch 9, dadurch gekennzeichnet,
daß der Deckel (39) an seiner Außenseite Führungsmittel (45) aufweist, die diesen bei
Betätigung der Spannmittel (44) in einer Haltevorrichtung (40) rechtwinklig zu seiner Ebene führen und
daß diese Haltevorrichtung (40) zusammen mit dem Dek-
kel (39) in den Führungen (38) aus dem Bereich der
Öffnung der Flüssigkeitskammer wegbewegbar ist.

11. Behälter nach Anspruch 10, dadurch gekennzeichnet, daß
die Spannmittel auch zum Abziehen des Deckels (39) von
der Öffnung (30) der Flüssigkeitskammer ausgebildet
sind.

12. Behälter nach einem der vorhergehenden Ansprüche
mit einem Mannloch, dadurch gekennzeichnet, daß
vor der Entleerungsöffnung (99) am unteren Ende
des Behälters oder an dem Rand des Mannlochs (10)
ein nach außen gerichteter Stutzen (104, 70) befestigt ist, der als Saftkammer ausgebildet ist
und einen Siebeinsatz (73, 74, 105) enthält.

13. Behälter nach Anspruch 12, dadurch gekennzeichnet, daß der als Saftkammer ausgebildete Stutzen (70, 104) in Führungen (5, 6) quer zur Achse der Öffnung (10, 90) aus ihrem Bereich wegbewegbar, bzw. vor diese Öffnung hinbewegbar ist.

14. Behälter nach einem der Ansprüche 1 bis 4, dadurch gekennzeichnet, daß die Flüssigkeitskammer (110) an allen vier Rändern fest mit der Behälterwand verschweißt ist und der Siebeinsatz (118) in Abschnitte unterteilt ist, die durch eine im Behälter ohnehin vorhandene Aussparung (10, 20, 90) heraustransportierbar sind.

15. Behälter nach Anspruch 14, dadurch gekennzeichnet, daß den Siebeinsatz (118) festhaltende Befestigungsmittel von der Außenseite des Behälters auslösbar sind.

16. Behälter nach einem der Ansprüche 1 bis 11, 14 und 15, dadurch gekennzeichnet, daß sich der Querschnitt der Flüssigkeitskammer über ihre Längsausdehnung von vorne nach hinten verjüngt.

17. Behälter nach einem der Ansprüche 1 bis 11, 14 und 15, dadurch gekennzeichnet, daß die Saftkammer (110) sich nur über einen Teil der vorderen Hälfte eines liegenden Tanks erstreckt und daß sich am hinteren Ende der Saftkammer (110) mindestens ein Saftkammerkanal (124, 125) anschließt, dessen Querschnitt wesentlich kleiner ist als der Querschnitt der Saftkammer (110).

18. Behälter nach einem der Ansprüche 1 bis 11 und 14 bis 17, dadurch gekennzeichnet, daß die obere Wand, die äußere Wand und die untere Wand der Saftkammer (110) und/oder des Saftkammerkanals (124, 125) aus Abkantungen der Behälterwand (111) gebildet sind.

19. Behälter nach einem der vorhergehenden Ansprüche außer den Ansprüchen 12 und 13 dadurch gekennzeichnet, daß sich die Flüssigkeitskammer (50) nahezu über die ganze Länge eines liegenden Behälters erstreckt und daß in ihr mehrere Siebeinsätze (55, 137, 138) hintereinander angeordnet sind.

20. Behälter nach einem der vorhergehenden Ansprüche außer den Ansprüchen 4, 12 und 13, dadurch gekennzeichnet, daß ein unterer Seitenwandabschnitt (130) der Flüssigkeitskammer (50) vom Boden (57) der Kammer (55) weg gegenüber der waagrechten Ebene nach unten geneigt verläuft.

21. Behälter nach Anspruch 20, an dessen unteren Ende eine Austragschnecke vorgesehen ist, dadurch gekennzeichnet, daß der untere Wandabschnitt (130) der Flüssigkeitskammer (50) oberhalb oder etwa in Höhe der waagrechten Mittelebene durch die Achse (133) der Austragschnecke (131) auf den die Schnecke (131) umgebenden Behälterabschnitt (132) trifft.

22. Behälter nach einem der vorhergehenden Ansprüche außer den Ansprüchen 14 und 15, dadurch gekennzeichnet, daß in der Flüssigkeitskammer (50) an deren vorderen Ende und in der Nähe einer unteren Wand (134) des Siebeinsatzes (55, 73, 105) ein in der Kammer (50) ortsfester Abstreifer (135) angeordnet ist, der beim Herausziehen der Siebeinsätze (55, 137, 138) die Innenfläche der Seitenwand (134) abstreift.

23. Behälter nach Anspruch 22 mit einem oder mehreren hintereinander angeordneten Siebeinsätzen, dadurch gekennzeichnet, daß in den Stirnwänden (142) außer in der vorderen Stirnwand (139) des vordersten Einsatzes (55) eine Aussparung (136) zum Durchtritt des Abstreifers (135) beim Herausziehen der Einsätze (55, 137, 138) angeordnet ist.

Fig.1

Fig.2

*Fig.3*

P 4096 EP

0072992

Fig. 4

P 4096 EP

0072992

2

41

38

46

43

44

45

40

39

42

45

43

44

13

38

46

16

*Fig.5*

P 4096 EP

Fig. 6

1

10 92 73

2

82

70

78 76

81 83 74

71

93 85 75

VIII ← --- → VIII

*Fig. 7*

79

78 82 76

81 83

73 93

70

71

74 72

84

92

78 77

75

80

*Fig. 8*

Fig.9

Fig.10

*Fig. 11*

*Fig. 12*

Fig.13

Fig.14